# EUROPÄISCHE PATENTSCHRIFT

(11) **EP 3 335 568 B1**
(45) Veröffentlichungstag und Bekanntmachung des Hinweises auf die Patenterteilung: **06.03.2019**
(21) Anmeldenummer: 17195875.4
(22) Anmeldetag: 11.10.2017
(51) Int. Cl.: A23C 7/04, A23L 2/02, A23L 2/52, A23L 2/76, A23L 5/20, A23L 21/10, A23L 23/00, B01D 19/00, A23C 9/133

(54) **VORRICHTUNG UND VERFAHREN ZUR HERSTELLUNG EINES FLÜSSIGEN ODER HALBFLÜSSIGEN LEBENSMITTELS**
DEVICE AND METHOD FOR PRODUCING A LIQUID OR SEMI-LIQUID FOOD PRODUCT
DISPOSITIF ET PROCÉDÉ DE FABRICATION D'UN DENRÉE ALIMENTAIRE LIQUIDE OU SEMI-LIQUIDE

(30) Priorität: 09.12.2016 DE 102016224563
(43) Veröffentlichungstag der Anmeldung: 20.06.2018
(73) Patentinhaber: KRONES Aktiengesellschaft, 93073 Neutraubling (DE)
(72) Erfinder: Feilner, Roland, 93073 Neutraubling (DE)
(74) Vertreter: Grünecker Patent- und Rechtsanwälte PartG mbB

(56) Entgegenhaltungen:
- EP-A1- 2 514 327
- EP-A2- 0 118 034
- WO-A1-2015/162041
- DE-A1-102013 005 096

## Beschreibung

### Gebiet der Erfindung

Die vorliegende Erfindung betrifft eine Vorrichtung und ein Verfahren zur Herstellung eines flüssigen oder halbflüssigen Lebensmittels, insbesondere von Fruchtsäften mit Fruchtstücken.

### Hintergrund der Erfindung

Heutzutage werden von der getränkeverarbeitenden Industrie und der Lebensmittelindustrie eine Vielzahl von flüssigen oder halbflüssigen Lebensmitteln bzw. Suspensionen angeboten, welche wenigstens einen festen Anteil in Form von Stückchen aufweisen. Beispiele sind insbesondere Fruchtsäfte, welche Fruchtstückchen einer oder mehrerer Früchte beinhalten. Andere Beispiele sind halbflüssige Lebensmittel mit festen Komponenten wie beispielsweise Saucen, Salsa oder Joghurte oder dergleichen. Dabei ist die Herstellung solcher Lebensmittel im Allgemeinen deutlich komplexer als die Herstellung homogener Getränke.

Im Stand der Technik bekannt ist die Herstellung nach dem sogenannten Einstromverfahren, bei dem dem homogenen Anteil ein die Stückchen enthaltender Anteil vor einer thermischen Behandlung des herzustellenden Lebensmittels beigemischt wird. Ebenso bekannt ist die Herstellung nach dem sogenannten Zweistromverfahren, bei dem der homogene Anteil, beispielsweise Saft, und der die Stückchen enthaltende Anteil getrennt voneinander thermisch behandelt, zum Beispiel pasteurisiert, werden und erst vor dem Füllen in einen sterilen Puffertank oder während des Füllens in einem Füllventil bzw. in dem Behälter, zum Beispiel einer Flasche, gemischt werden.

Beide Konzepte weisen jedoch Nachteile auf. So kommt es beim Einstromverfahren im Entgaser, in dem das herzustellende Lebensmittel mittels Unterdrucks von Sauerstoff und anderen schädlichen Gasen befreit wird, durch den erforderlichen Druckabbau zu unerwünschten Beschädigungen an den mitgeführten Stückchen. Aus diesem Grund wird der feste Anteil üblicherweise am Entgaser vorbeigeführt, was jedoch aufgrund der in den festen Anteilen enthaltenen Gase zum Aufschwimmen der Stückchen in der Flasche und zu einer oxidativen Beeinträchtigung aufgrund des enthaltenen Sauerstoffs führen kann. Während das Zweistromverfahren diese Nachteile umgeht, ist es aufgrund des deutlich höheren apparativen Aufwands erheblich teurer.

Die internationale Patentanmeldung WO 2015/162041 A1 offenbart eine Vorrichtung nach einem modifizierten Zweistromverfahren, bei der der die Fruchtstückchen enthaltende Anteil vor der thermischen Behandlung, aber nach dem Entgaser dem Saft zugeführt wird.

Der vorliegenden Erfindung liegt somit die Aufgabe zugrunde, eine Vorrichtung und ein Verfahren zur Herstellung von flüssigen oder halbflüssigen Lebensmitteln zur Verfügung zu stellen, welche eine schonende Behandlung der zudosierten Stückchen bei gleichzeitig geringem Installationsaufwand und geringen Betriebskosten ermöglicht.

### Beschreibung der Erfindung

Die oben genannte Aufgabe wird gelöst durch eine Vorrichtung zur Herstellung eines flüssigen oder halbflüssigen Lebensmittels, wobei das Lebensmittel ein erstes Gemisch und ein zweites Gemisch umfasst, wobei das zweite Gemisch feste Anteile, insbesondere Fruchtstücke, in einer höheren Konzentration als das erste Gemisch enthält, mit einem Entgaser, der dazu ausgebildet ist, das erste Gemisch zumindest teilweise zu entgasen, einer ersten Zuführvorrichtung zum Zuführen des ersten Gemischs zum Entgaser und einer zweiten Zuführvorrichtung zum Zudosieren des zweiten Gemischs zum zumindest teilweise entgasten ersten Gemisch, wobei die zweite Zuführvorrichtung in einen Unterdruckbereich des Entgasers oder in einen Unterdruckbereich stromabwärts vom Entgaser mündet.

Wie oben beschrieben sind unter flüssigen oder halbflüssigen Lebensmitteln insbesondere Fruchtsäfte zu verstehen, welche Fruchtstückchen einer oder mehrerer Früchte beinhalten. Ebenso sind von dem Begriff der flüssigen oder halbflüssigen Lebensmittel gemäß der vorliegenden Erfindung auch Saucen, Salsa, Suppen, Marmeladen und Joghurte umfasst, welche einen festen Anteil in Form von Stückchen aufweisen.

Erfindungsgemäß umfasst das flüssige oder halbflüssige Lebensmittel ein erstes Gemisch und ein zweites Gemisch, wobei das zweite Gemisch feste Anteile, insbesondere Fruchtstücke, in einer höheren Konzentration als das erste Gemisch enthält. Dies schließt nicht aus, dass auch das erste Gemisch feste Anteile aufweist. Die vorliegende Erfindung ist jedoch besonders auf solche Lebensmittel anwendbar, bei denen das erste Gemisch frei von festen Bestandteilen, insbesondere Fruchtstückchen, ist, wobei die festen Bestandteile durch Beimischen des zweiten Gemischs zum ersten Gemisch hinzugefügt werden. Der Einfachheit halber wird hier und im Folgenden das zweite Gemisch, das die festen Bestandteile umfasst, auch als Slurry bezeichnet, selbst wenn es sich bei dem Lebensmittel nicht um Fruchtsäfte handelt. Entsprechend wird das erste Gemisch auch als Saft bezeichnet, selbst wenn es sich bei dem Lebensmittel nicht um Fruchtsäfte handelt.

Das erste Gemisch kann beispielsweise 80 bis 95 % Wasser aufweisen. Zusätzlich kann das erste Gemisch 6 bis 18 % Zucker aufweisen. Weitere, insbesondere flüssige Bestandteile sind für das erste Gemisch denkbar. Das zweite Gemisch kann neben den festen Bestandteilen, d.h. Stückchen, insbesondere Wasser aufweisen, wobei das Massenverhältnis von Wasser und festen Bestandteilen etwa 1:1 betragen kann. Das zweite Gemisch kann zur Herstellung des Lebensmittels dem ersten Gemisch im Verhältnis 1:15 bis 1:2, bevorzugt 1:12 bis 1:4 beigemischt werden. Die Stückchen können einen Durchmesser im Bereich von 1 bis 10 mm, bevorzugt 1 bis 5 mm aufweisen. Das Beimischen des Slurry zum ersten Gemisch wird hier und im Folgenden auch als Zudosage bzw. Zudosieren bezeichnet.

Die Vorrichtung umfasst einen Entgaser, der dazu ausgebildet ist, das erste Gemisch zumindest teilweise zu entgasen. Entgaser sind im Stand der Technik allgemein bekannt. Dabei erfolgt der Entzug der unerwünschten Gase aus dem zu entgasenden Produkt üblicherweise durch Unterdruck, wobei zusätzlich ein Strippgas eingesetzt werden kann, um die unerwünschten Gase, beispielsweise Sauerstoff, aus dem zu entgasenden Produkt auszutreiben. Hierzu weist der Entgaser einen Zulauf für das zu entgasende Produkt auf, durch den das Produkt in einen Behälter, beispielsweise einen Tank oder eine Kolonne, des Entgasers eingebracht werden kann. Dabei kann das Produkt entweder kontinuierlich in den Entgaser eingebracht werden oder der Behälter im Sinne einer Batchverarbeitung mit einer vorgegebenen Menge Produkt befüllt werden, welches anschließend entgast wird.

Wie oben erwähnt kann zusätzlich zur Entgasung durch Reduzierung des Drucks in dem Entgaser auf einen Vakuumdruck auch ein Strippgas über eine Strippgaszuleitung des Entgasers in einen Innenraum des Entgasers eingebracht werden. Dabei kann das Strippgas vor Einbringen des Produkts, d.h. des ersten Gemischs, in den Entgaser diesem zugesetzt werden oder direkt in den Innenraum des Entgasers eingebracht werden. Hierzu kann der Entgaser, und insbesondere ein Innenraum des Behälters bzw. der Kolonne, derart ausgebildet sein, dass sich in dem Behälter bzw. der Kolonne eine wohldefinierte Atmosphäre, d.h. insbesondere eine Atmosphäre mit wohldefiniertem Druck und/oder Zusammensetzung, herstellen lässt. Bei dem Strippgas kann es sich um Wasserstoff oder ein wasserstoffhaltiges Gas, um Kohlendioxid oder ein kohlendioxidhaltiges Gas, um ein Inertgas, beispielsweise Stickstoff, oder ein anderes geeignetes Gas, sowie eine Kombination der zuvor genannten Gase handeln. Vorzugsweise ist das Strippgas steril und wasserdampffrei.

Der Entgaser kann, beispielsweise durch entsprechende Anordnung des Zulaufs für das zu entgasende Produkt, des Auslaufs für das zumindest teilweise entgaste Produkt, der Zuleitung für das Strippgas und/oder der Abzugsleitung für das Strippgas, derart ausgebildet sein, dass das Strippgas im Gegenstrom zum zu entgasenden Produkt durch den Entgaser geführt wird. Eine besonders große Oberfläche des zu entgasenden Produkts lässt sich beispielsweise durch Ausbildung des Entgasers als Filmentgaser, insbesondere als Rieselfilmentgaser, erreichen. Im Allgemeinen sammelt sich das zumindest teilweise entgaste Produkt in einem Bodenbereich des Entgasers bis zu einem regeltechnisch vorgegebenen Füllstand, aus dem es beispielsweise mittels einer Pumpe abgezogen werden kann. Im Folgenden wird dieser Bodenbereich des Entgasers inklusive des Auslaufs für das zumindest teilweise entgaste Produkt als Auslaufbereich des Entgasers bezeichnet.

Erfindungsgemäß weist die Vorrichtung eine erste Zuführvorrichtung zum Zuführen des ersten Gemischs zum Entgaser auf. Hierzu kann die erste Zuführvorrichtung beispielsweise eine Leitung für das erste Gemisch aufweisen, welche in den Entgaser, insbesondere in einen oberen Bereich des Entgasers, mündet. Die erste Zuführvorrichtung kann zusätzlich einen Vorratsbehälter für das erste Gemisch, eine Pumpe zum Fördern des ersten Gemischs und/oder weitere benötigte Vorrichtungen, wie beispielsweise regelbare Ventile oder Sensoren, aufweisen.

Des Weiteren weist die Vorrichtung eine zweite Zuführvorrichtung zum Zudosieren des zweiten Gemischs zum zumindest teilweise entgasten ersten Gemisch auf. Die zweite Zuführvorrichtung ist somit derart ausgebildet, dass das zweite Gemisch dem ersten Gemisch erst dann zugeführt wird, wenn dieses bereits im Wesentlichen durch den Entgaser hindurchgetreten ist. Insbesondere wird das zweite Gemisch dem ersten Gemisch nicht schon vor Eintritt in den Entgaser zugeführt und auch nicht direkt in die oben erwähnte wohldefinierte Atmosphäre über dem Füllstand eingebracht. Vielmehr ist die zweite Zuführvorrichtung derart ausgebildet, dass sie in einen Unterdruckbereich des Entgasers oder in einen Unterdruckbereich stromabwärts vom Entgaser mündet. Hierzu kann auch die zweite Zuführvorrichtung eine entsprechende Leitung aufweisen, die in den Unterdruckbereich des Entgasers oder stromabwärts vom Entgaser in einen Unterdruckbereich mündet. Wie auch die erste Zuführeinrichtung kann die zweite Zuführeinrichtung weitere Komponenten, beispielsweise den weiter unten beschriebenen Vorratsbehälter sowie Pumpen, aufweisen, welche der Zufuhr des Slurry dienen.

Der Unterdruckbereich des Entgasers umfasst hier und im Folgenden den gesamten Innenraum des Entgasers, der, beispielsweise mittels einer hierzu geeigneten Vakuumpumpe, auf einen Unterdruck gebracht wird. Zusätzlich umfasst der Unterdruckbereich des Entgasers auch den oben beschriebenen Auslaufbereich, da das zumindest teilweise entgaste erste Gemisch auch im Auslaufbereich einem Druck unterliegt, der geringer als der Umgebungsdruck ist. Entsprechend liegt auch in einer mit dem Auslauf des Entgasers verbundenen Abzugsleitung für das zumindest teilweise entgaste Produkt so weit ein Druck vor, der geringer als der Umgebungsdruck ist, bis der hydrodynamische Druck durch eine den Druck erhöhende Vorrichtung wieder auf den Umgebungsdruck oder einen höheren Druck angehoben wird. Dies kann beispielsweise durch eine Förderpumpe in der Abzugsleitung oder ein Belüftungsventil einer nachgeordneten Vorrichtung, beispielsweise eines Hocherhitzers bzw. Pasteurisierers, mithilfe dessen das Lebensmittel von unerwünschten Keimen befreit wird, erfolgen. Der stromabwärts vom Entgaser angeordnete Unterdruckbereich umfasst somit den Bereich zwischen dem Auslauf des Entgasers und der Förderpumpe bzw. dem Hocherhitzer.

Da die zweite Zuführvorrichtung in einen Unterdruckbereich des Entgasers oder in einen Unterdruckbereich stromabwärts vom Entgaser mündet, kann bei der erfindungsgemäßen Vorrichtung ein einziger Hocherhitzer verwendet werden, um das gesamte Lebensmittel keimfrei zu machen. Die beschriebene Vorrichtung weist somit den Vorteil des Einstromverfahrens auf, dass die Anlage vereinfacht werden kann und somit geringere Installationskosten verursacht, während gleichzeitig der Großteil des Produktes von Sauerstoff befreit werden kann und unerwünschte Beschädigungen der zugesetzten Stückchen durch den Druckabbau beim Durchgang durch den Entgaser vermieden werden.

Während in der zweiten Zuführvorrichtung beispielsweise der Umgebungsdruck herrscht, kann der Druck in der Zuleitung zum Entgaser für das erste Gemisch, beispielsweise mittels eines Drosselventils, auf einen Unterdruck von beispielsweise 200 mbar bis 600 mbar, bevorzugt 200 mbar bis 400 mbar, reduziert werden. Dieser Unterdruck herrscht dabei auch in der Atmosphäre über dem Füllstand des zumindest teilweise entgasten ersten Gemischs im Entgaser.

Gemäß einer Weiterbildung kann die zweite Zuführvorrichtung in einen Auslauf des Entgasers für das zumindest teilweise entgaste erste Gemisch münden. Bei dieser Weiterbildung mündet beispielsweise eine Leitung der zweiten Zuführvorrichtung in den Auslauf des Entgasers. Im eigentlichen Innenraum des Entgasers, d. h. inklusive des Bodenbereichs, in dem sich das zumindest teilweise entgaste erste Gemisch sammelt, befindet sich somit kein zweites Gemisch. Da das zumindest teilweise entgaste erste Gemisch im Auslauf des Entgasers weiterhin unter Unterdruck steht, führt das Zudosieren des zweiten Gemischs in den Auslauf des Entgasers dazu, dass die Stückchen von unerwünschten Gasen befreit werden können. Der Auslauf des Entgasers kann dabei derart ausgebildet und angeordnet sein, dass die den Stückchen entzogenen Gase durch den Auslauf in den Innenraum des Entgasers aufsteigen, von wo aus sie beispielsweise mittels einer Vakuumpumpe abgepumpt werden können. Gleichzeitig ist der vorherrschende Druck im Auslauf des Entgasers jedoch größer als in der Atmosphäre im Entgaser, sodass das Zudosieren produktschonend erfolgen kann. Somit kann das gesamte Lebensmittel entgast werden, ohne dass die Stückchen zerstört würden.

Alternativ kann die zweite Zuführvorrichtung in den Entgaser unterhalb des oben genannten Füllstands von sich in einem Bodenbereich des Entgasers ansammelndem Lebensmittel münden. Somit erfolgt das Zudosieren des zweiten Gemischs bereits im Entgaser, sodass sich in dem Bodenbereich das bereits fertig gemischte Lebensmittel ansammelt. Je nachdem in welcher Höhe die Mündung der zweiten Zuführvorrichtung bezüglich des Füllstands liegt, ist der in der Atmosphäre vorliegende Unterdruck durch die Höhe der Flüssigkeitssäule über der Mündung entsprechend erhöht. Der zu überwindende Druckunterschied zwischen dem Umgebungsdruck und dem Druck an der Mündung der zweiten Zuführvorrichtung ist somit reduziert gegenüber dem Einbringen des zweiten Gemischs in die Vakuumatmosphäre des Entgasers. Somit kann das zweite Gemisch produktschonend zudosiert werden, während gleichzeitig die zudosierten Stückchen weitgehend entgast werden können.

Die Mündung der zweiten Zuführvorrichtung kann beispielsweise 50 cm bis 400 cm, bevorzugt 100 cm bis 200 cm, unterhalb eines regeltechnisch vorgegebenen Füllstands im Entgaser angeordnet sein. Dies führt zu einer Erhöhung des Drucks um 50 mbar bis 400 mbar, bevorzugt um 100 mbar bis 200 mbar. Der Bodenbereich des Entgasers kann hierzu entsprechend zylindrisch oder zylindrokonisch ausgebildet sein.

Gemäß einer Weiterbildung kann die zweite Zuführvorrichtung in eine mit dem Entgaser verbundene Abzugsleitung münden. Wie oben beschrieben mündet die Zuführvorrichtung, d.h. eine Leitung der Zuführvorrichtung, somit in den Unterdruckbereich zwischen dem Auslauf des Entgasers und einem Punkt der Abzugsleitung, an dem der Druck auf den Umgebungsdruck oder darüber angehoben wird. Dies kann beispielsweise eine Förderpumpe in der Abzugsleitung sein. Des Weiteren kann zwischen dem Entgaser und der Stelle der Einmündung der zweiten Zuführvorrichtung ein Siphon vorgesehen sein, der verhindert, dass über die zweite Zuführvorrichtung eingebrachte Stückchen zurück in den Entgaser gelangen, wo sie aufgrund ihres Gasgehalts auftreiben könnten. Über ein Entlüftungsventil können sich im Siphon bildende Gasblasen entfernt werden. Dabei kann es vorteilhaft sein, dass Entlüftungsventil mit der Atmosphäre des Entgasers oder mit der Vakuumpumpe des Entgasers zu verbinden.

Gemäß einer Weiterbildung kann die zweite Zuführvorrichtung einen Vorratsbehälter, insbesondere einen Mischtank, aufweisen, der dazu ausgebildet ist, das zweite Gemisch mit einem Vordruck bereitzustellen, der größer als der Druck im Unterdruckbereich ist. Hierzu kann der Vorratsbehälter bereits bei Befüllung unter Druck gesetzt werden oder mittels geeigneter Vorrichtungen auf einem Druck gehalten werden, der größer als der Druck im Unterdruckbereich ist. Beispielsweise kann mittels einer (regelbaren) Pumpe ein steriles Gas, beispielsweise ein Inertgas, in den Vorratsbehälter gepumpt werden, um einen gewünschten Druck zu erzeugen.

Der Druck im Vorratsbehälter kann dabei insbesondere derart vorgegeben werden, dass eine Förderung des zweiten Gemischs in der zweiten Zuführvorrichtung über die Druckdifferenz zwischen dem Vordruck und dem Druck im Unterdruckbereich erfolgt. Dies kann auch durch Einsatz eines regelbaren Ventils, insbesondere eines Schnüffelventils, erreicht werden, welches in Abhängigkeit von der aus dem Vorratsbehälter abgeführten Menge an Slurry steriles Fremdgas bzw. ein Inertgas ansaugt und damit dafür sorgt, dass der Vordruck im Vorratsbehälter einen konstanten Wert, beispielsweise den Umgebungsdruck, besitzt.

Wie oben erwähnt kann die zweite Zuführvorrichtung derart ausgebildet sein, dass eine Förderung des zweiten Gemischs in der zweiten Zuführvorrichtung über die Druckdifferenz zwischen dem Vordruck und dem Druck im Unterdruckbereich erfolgt. In diesem Fall kann das Zudosieren von zweitem Gemisch zum ersten Gemisch im Unterdruckbereich des Entgasers bzw. stromabwärts vom Entgaser auf besonders einfache Weise, beispielsweise unter Einsatz eines (regelbaren) Dosierventils, zum Beispiel einer Drosselklappe, in der Zuführleitung gesteuert werden.

Alternativ oder ergänzend kann die zweite Zuführvorrichtung eine Pumpe zum Fördern des zweiten Gemischs, insbesondere eine Verdrängerpumpe oder eine Schubpumpe, oder eine Bremspumpe aufweisen. Eine Bremspumpe kann insbesondere als Alternative zu der oben erwähnten Drosselklappe vorgesehen werden, wenn die Förderung des zweiten Gemischs in der Zuführleitung im Wesentlichen aufgrund des Druckunterschieds und/oder des Gewichts des zweiten Gemischs erfolgt.

Bei Verwendung einer Bremspumpe wird der Druck des durch die Bremspumpe hindurch geförderten zweiten Gemischs über eine Antriebsbewegung der Bremspumpe abgebaut. Die Bremspumpe wirkt somit wie ein Hydromotor, der von dem unter Druck stehenden zweiten Gemisch angetrieben wird und dabei den Druck ohne enge Drosselspalte hauptsächlich über die mit einer Drehbewegung verbundene Expansion abbaut. Die in dem zweiten Gemisch enthaltenen Stückchen müssen somit keine engen Spalten passieren. Vielmehr kann sich das zweite Gemisch schonend entspannen, sodass die Stückchen keine Schäden erleiden und auch die Bremspumpe selbst keiner nennenswerten mechanischen Belastung ausgesetzt wird. Zusätzlich zu der oben erwähnten Druckdifferenz kann der Vorratsbehälter für das zweite Gemisch im Schwerefeld der Erde oberhalb der Mündung der zweiten Zuführvorrichtung angeordnet sein, sodass auch das Eigengewicht des zweiten Gemischs zur Förderung des zweiten Gemischs beiträgt.

Für den Fall, dass die Druckdifferenz und/oder das Eigengewicht des zweiten Gemischs nicht ausreichen, um eine zuverlässige Förderung des zweiten Gemischs in der zweiten Zuführvorrichtung zu garantieren, kann wie erwähnt eine Pumpe zum Fördern des zweiten Gemischs in der Zuführleitung vorgesehen sein. Diese Pumpe kann insbesondere regelbar ausgebildet sein und über Signalleitungen oder kabellos mit einer entsprechenden Regeleinheit der Vorrichtung verbunden sein. Als Förderpumpe können insbesondere Verdrängerpumpen, Exzenterschneckenpumpen, Kolbenpumpen oder Membranpumpen zum Einsatz gelangen, welche die festen Bestandteile des Slurry ohne wesentliche Scherbeanspruchung fördern können. Ebenso kann die Förderpumpe als Schubpumpe ausgebildet sein. Die Förderpumpe kann dabei mittels der Regeleinheit derart geregelt werden, dass die rezepturabhängige Menge an Slurry dem ersten Gemisch beigemischt wird.

Des Weiteren kann die Vorrichtung auch eine Förderpumpe zum Fördern des ersten Gemischs in einer Zuführleitung der ersten Zuführvorrichtung aufweisen, die ebenso regelbar ausgebildet sein kann. Für die Förderpumpe für das erste Gemisch können Rotationspumpen, beispielsweise Drehkolbenpumpen, Kreiselpumpen oder Zahnradpumpen, zum Einsatz gelangen. Die Vorrichtung kann weiterhin einen Erhitzer im Bereich der ersten Zuführvorrichtung aufweisen, der dazu ausgebildet ist, das erste Gemisch vor Zufuhr zu dem Entgaser auf eine der Entgasung zuträgliche Temperatur, beispielsweise im Bereich von 50 °C bis 70 °C, bevorzugt im Bereich von 55 °C bis 65 °C, vorzuerwärmen, bei der die Löslichkeit der unerwünschten Gase in der Flüssigkeit reduziert ist. Durch Vorerwärmung des ersten Gemischs, zum Beispiel des Safts, vor Zufuhr zum Entgaser wird eine vollständigere Entfernung der unerwünschten Gasanteile erzielt. Bei der erfindungsgemäßen Vorrichtung kann aufgrund der Beimischung des Slurry stromabwärts vom Entgaser bzw. in den Auslaufbereich des Entgasers auf eine Vorerwärmung des Slurry verzichtet werden.

Wie im Einstromverfahren kann stromabwärts von der Stelle der Zudosage des zweiten Gemischs eine Vorrichtung zur thermischen Behandlung des herzustellenden Lebensmittels, insbesondere ein Hocherhitzer oder Pasteurisierer, vorgesehen sein, mittels dessen im flüssigen oder halbflüssigen Lebensmittel vorhandene Keime abgetötet werden. Da Hocherhitzer, beispielsweise Kurzzeiterhitzer, und Pasteurisierer im Stand der Technik wohl bekannt sind, wird hier auf eine detaillierte Beschreibung verzichtet. Anders als im Zweistromverfahren ist bei der erfindungsgemäßen Vorrichtung jedoch nur ein Hocherhitzer bzw. Pasteurisierer erforderlich, sodass Installationskosten und Betriebskosten der Gesamtanlage eingespart werden können.

Die oben genannten Aufgaben werden auch durch ein Verfahren zur Herstellung eines flüssigen oder halbflüssigen Lebensmittels gelöst, wobei das Lebensmittel ein erstes Gemisch und ein zweites Gemisch umfasst, wobei das zweite Gemisch feste Anteile, insbesondere Fruchtstücke, in einer höheren Konzentration als das erste Gemisch enthält, mit den Schritten: Zuführen des ersten Gemischs zu einem Entgaser; zumindest teilweises Entgasen des ersten Gemischs im Entgaser; und Zudosieren des zweiten Gemischs zum zumindest teilweise entgasten ersten Gemisch; wobei die Zudosage des zweiten Gemischs in einen Unterdruckbereich des Entgasers oder in einen Unterdruckbereich stromabwärts vom Entgaser erfolgt.

Dabei können dieselben Variationen und Weiterbildungen, die oben im Zusammenhang mit der erfindungsgemäßen Vorrichtung zur Herstellung von flüssigen oder halbflüssigen Lebensmitteln beschrieben wurden, auch auf das Verfahren zur Herstellung von flüssigen oder halbflüssigen Lebensmitteln angewendet werden. Insbesondere kann es sich bei den flüssigen oder halbflüssigen Lebensmitteln um Fruchtsäfte handeln, welche Fruchtstückchen einer oder mehrerer Früchte beinhalten.

Das Entgasen des ersten Gemischs im Entgaser kann wie beschrieben durch Unterdruck erfolgen, wobei zusätzlich ein Strippgas in den Entgaser eingeführt werden kann, um unerwünschte Gase aus dem ersten Gemisch auszutreiben. Wie oben beschrieben kann das erste Gemisch von oben in den Entgaser eingeführt werden, in dem es in Form eines Rieselfilms an der Wand des Innenraums des Entgasers herabrinnt. Im Gegenzug kann das Strippgas von unten, beispielsweise unterhalb eines Füllstandes von sich in einem Bodenbereich des Entgasers sammelnden Lebensmittel, in den Entgaser eingebracht werden, von wo es im Gegenstrom zu dem herabrinnenden ersten Gemisch zu einem Abzug für das Strippgas im oberen Bereich des Entgasers, d.h. in einem Gasraum über dem Füllstand, strömt. Aufgrund des reduzierten Partialdrucks der unerwünschten Gase im Gasraum des Entgasers treten die unerwünschten Gase, welche bei Umgebungsdruck in das erste Gemisch gelangt sind, aus diesem zumindest teilweise aus, wobei insbesondere der Restsauerstoffgehalt der herzustellenden Lebensmittel reduziert wird. Auf diese Weise kann eine oxidative Beeinträchtigung der Lebensmittelqualität verhindert werden. Das zumindest teilweise entgaste erste Gemisch wird allein oder nach Beimischung des zweiten Gemischs über einen Auslauf des Entgasers abgezogen.

Wie oben beschrieben umfasst der Unterdruckbereich des Entgasers insbesondere den Innenraum des Entgasers. Zusätzlich umfasst der Unterdruckbereich des Entgasers auch den oben beschriebenen Auslaufbereich. Der stromabwärts vom Entgaser angeordnete Unterdruckbereich umfasst wie beschrieben den Bereich zwischen dem Auslauf des Entgasers und der Förderpumpe bzw. dem Hocherhitzer. Das zweite Gemisch kann dem ersten Gemisch im Verhältnis 1:15 bis 1:2, bevorzugt 1:12 bis 1:4 beigemischt werden.

Gemäß einer Weiterbildung kann die Zudosage des zweiten Gemischs in einen Auslauf des Entgasers für das zumindest teilweise entgaste erste Gemisch erfolgen. Dies kann insbesondere derart erfolgen, beispielsweise über die Strömungsrichtung des beigemischten zweiten Gemischs bezüglich der Strömungsrichtung des über den Auslauf austretenden ersten Gemischs, dass die in dem zweiten Gemisch enthaltenen Stückchen nicht in den Entgaser zurück gelangen.

Alternativ kann die Zudosage des zweiten Gemischs in den Entgaser unterhalb eines Füllstands von sich in einem Bodenbereich des Entgasers ansammelndem Lebensmittel erfolgen. Wie oben beschrieben kann die Zudosage beispielsweise 50 cm bis 400 cm, bevorzugt 100 cm bis 200 cm, unterhalb eines regeltechnisch vorgegebenen Füllstands im Entgaser angeordnet sein. Das erfindungsgemäße Verfahren kann somit eine Regelung der Zufuhr des ersten Gemischs zu dem Entgaser sowie des Abzugs des ersten Gemischs bzw. Lebensmittels über den Auslauf des Entgasers mittels geeigneter Vorrichtungen, beispielsweise regelbarer Pumpen und/oder Regelventilen, derart umfassen, dass sich in dem Bodenbereich des Entgasers ein gewünschter Füllstand des zumindest teilweise entgasten ersten Gemischs bzw. des Lebensmittels einstellt. Dabei kann die Zufuhr von zu entgasendem ersten Gemisch und/oder Strippgas in Abhängigkeit von einer Temperatur des zu entgasenden ersten Gemischs sowie der Zusammensetzung des ersten Gemischs und dem verwendeten Strippgas geregelt werden.

Gemäß einer Weiterbildung kann die Zudosage des zweiten Gemischs in eine mit dem Entgaser verbundene Abzugsleitung, insbesondere stromabwärts von einem stromabwärts vom Entgaser angeordneten Siphon, erfolgen. Hierbei gelten die oben beschriebenen Weiterbildungen. Insbesondere kann das aufgrund des Unterdrucks aus dem beigemischten zweiten Gemisch austretende Gas über ein Ventil und/oder eine Pumpe aus dem oberen Bereich des Siphons abgezogen werden.

Das nunmehr zusammengemischte Lebensmittel kann über eine (regelbare) Förderpumpe weiter zu einer Vorrichtung zur thermischen Behandlung, beispielsweise einem Hocherhitzer oder Pasteurisierer, gefördert werden, in der das Lebensmittel auf eine vorgegebene Temperatur, beispielsweise >70 °C, bevorzugt >80 °C, erhitzt wird, um das herzustellende Lebensmittel von Keimen zu befreien. Mittels der Förderpumpe kann gleichzeitig die räumliche Begrenzung des Unterdruckbereichs definiert werden, indem durch die Förderleistung der Pumpe eine Anhebung des hydrodynamischen Drucks des geförderten Lebensmittels auf den Umgebungsdruck oder einen zur weiteren Verarbeitung gewünschten erhöhten Druck erfolgt.

Gemäß einer Weiterbildung kann das zweite Gemisch zumindest teilweise aufgrund einer Druckdifferenz zwischen einem Bereitstellungsdruck des zweiten Gemischs und dem Unterdruck im Unterdruckbereich zudosiert werden. Der Bereitstellungsdruck kann wie oben beschrieben mittels geregelter Zufuhr eines sterilen Gases, beispielsweise eines Inertgases, zu einem Vorratsbehälter für das zweite Gemisch eingestellt werden. Dies kann automatisch durch Vorsehen eines Schnüffelventils oder durch Regelung einer entsprechenden Pumpe bzw. eines entsprechenden Ventils erzielt werden. Insbesondere kann ein Bereitstellungsdruck vorgesehen werden, der größer oder gleich dem Umgebungsdruck ist. Der entlang einer Zuführleitung für das zweite Gemisch vorliegende Druckunterschied zwischen dem Bereitstellungsdruck und dem Druck an der Stelle, an der das zweite Gemisch dem ersten Gemisch beigemischt wird, führt automatisch zu einer Förderung des zweiten Gemischs hin zum Unterdruckbereich des Entgasers bzw. stromabwärts vom Entgaser. Diese druckbedingte Förderung des zweiten Gemischs kann wie oben beschrieben durch das Eigengewicht des zweiten Gemischs unterstützt werden. Eine Förderpumpe für das zweite Gemisch ist somit nicht zwingend erforderlich.

Das zweite Gemisch kann jedoch zumindest teilweise mittels einer Pumpe, insbesondere einer Bremspumpe, einer Verdrängerpumpe oder einer Schubpumpe, zudosiert werden. Der Widerstand der Bremspumpe kann dabei von einer Regeleinheit derart geregelt werden, dass in Abhängigkeit von der oben erwähnten Druckdifferenz und/oder dem Eigengewicht des zweiten Gemischs eine für eine bestimmte Rezeptur gewünschte Zudosagemenge zudosiert wird. Sollte wie oben beschrieben die Druckdifferenz und/oder das Eigengewicht des zweiten Gemischs nicht für die Förderung ausreichen, kann das zweite Gemisch mittels einer (regelbaren) Verdrängerpumpe bzw. Schubpumpe gefördert werden. Dabei kann wie erwähnt die Förderpumpe rezepturabhängig geregelt werden, um die gewünschte Zudosierung an Slurry zum ersten Gemisch sicherzustellen.

Wie erwähnt kann das zweite Gemisch auch zumindest teilweise mittels der Schwerkraft zudosiert werden. Hierzu kann ein Vorratsbehälter für das zweite Gemisch im Schwerefeld der Erde oberhalb einer Mündung einer Zuführleitung für das zweite Gemisch zum ersten Gemisch vorgesehen sein.

Die Zudosage von Slurry zum ersten Gemisch kann somit allein durch den Druckunterschied und/oder die Schwerkraft erfolgen und alternativ oder ergänzend über eine Förderpumpe geregelt werden. Dies vereinfacht die Zudosage, während gleichzeitig eine produktschonende Förderung des Slurry garantiert werden kann. Da die Zudosage des Slurry in den Unterdruckbereich des Entgasers bzw. den stromabwärts vom Entgaser angeordneten Unterdruckbereich erfolgt, findet die Zudosage insbesondere vor einem nachgeschalteten Hocherhitzer bzw. Pasteurisierer statt. Daher weist das erfindungsgemäße Verfahren dieselben Vorteile wie das Einstromverfahren bezüglich der reduzierten Installations- und Betriebskosten der verwendeten Anlage auf, während gleichzeitig unerwünschten Beschädigungen an den zudosierten festen Anteilen aufgrund des Druckabbaus vermieden werden können.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 stellt eine Prinzipskizze für eine beispielhafte Ausführung einer Vorrichtung zur Herstellung von flüssigen oder halbflüssigen Lebensmitteln gemäß der vorliegenden Erfindung dar.
Figur 2 zeigt schematisch den Auslaufbereich eines Entgasers gemäß einer ersten Weiterbildung.
Figur 3 zeigt schematisch den Auslaufbereich eines Entgasers gemäß einer alternativen Weiterbildung.
Figur 4 zeigt schematisch eine Vorrichtung zum Zudosieren des zweiten Gemischs gemäß einer ersten Weiterbildung der vorliegenden Erfindung.
Figur 5 zeigt schematisch eine Vorrichtung zum Zudosieren des zweiten Gemischs gemäß einer alternativen Weiterbildung der vorliegenden Erfindung.

In den im Folgenden beschriebenen Figuren bezeichnen gleiche Bezugszeichen gleiche Elemente. Zur besseren Übersichtlichkeit werden gleiche Elemente nur bei ihrem ersten Auftreten beschrieben. Es versteht sich jedoch, dass die mit Bezug auf eine der Figuren beschriebenen Varianten und Ausführungsformen eines Elements auch auf die entsprechenden Elemente in den übrigen Figuren angewendet werden können.

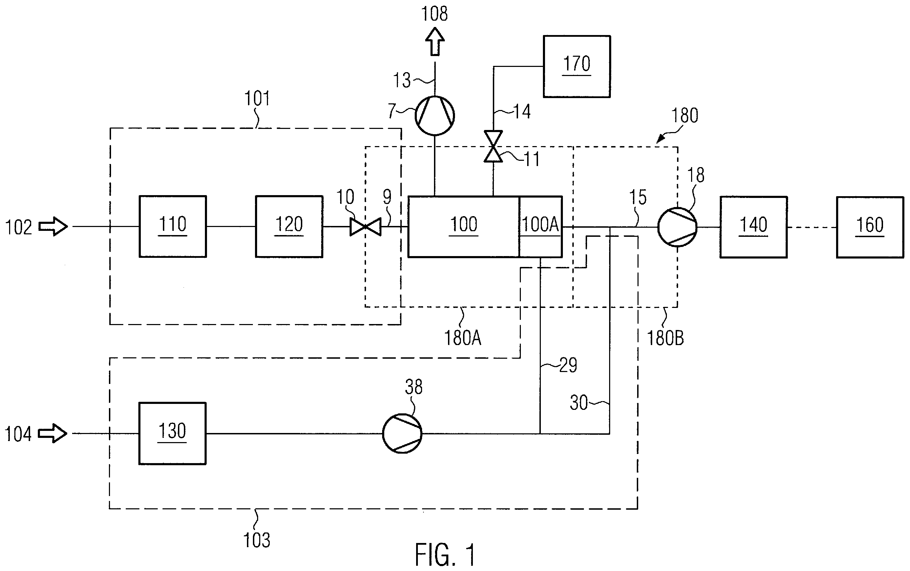

In der Figur 1 ist eine Prinzipskizze für eine beispielhafte Ausführung einer Vorrichtung zur Herstellung von flüssigen oder halbflüssigen Lebensmitteln gemäß der vorliegenden Erfindung dargestellt. Die dargestellte Vorrichtung kombiniert die Vorteile des Einstromverfahrens und des Zweistromverfahrens zur Herstellung von Fruchtgetränken mit Fruchtstückchen.

Wie durch die Pfeile auf der linken Seite der Figur 1 angedeutet wird mittels einer ersten Zuführvorrichtung 101 ein erstes Gemisch 102, welches im Wesentlichen frei von Fruchtstückchen ist, bereitgestellt. Bei dem ersten Gemisch 102 kann es sich insbesondere um Saft handeln, wobei dieser neben Wasser eine Zuckerlösung und eine Saftkonzentratmischung enthalten kann. Mittels einer zweiten Zuführvorrichtung 103 wird gleichzeitig ein zweites Gemisch 104 bereitgestellt, welches die zuzusetzenden Fruchtstückchen enthält. Das zweite Gemisch 104, der sogenannte Slurry, kann dabei neben den Fruchtstückchen auch Wasser oder andere Flüssigkeiten enthalten.

In der hier dargestellten vereinfachten Weiterbildung wird das erste Gemisch 102 zunächst einem Puffer oder Mischtank 110 zugeführt, in dem es gemischt wird. Alternativ kann das erste Gemisch 102 mittels eines Vorratsbehälters 110 bereitgestellt werden. Von dort aus kann der Saft einem Vorerwärmer 120 zugeführt werden, in dem er beispielsweise auf 60 °C erwärmt wird. Anschließend wird der vorerwärmte Saft über ein regelbares Ventil 10 und eine Zuführleitung 9 in den Entgaser 100 eingebracht. In der Zuführleitung 9 oder am Zulauf in den Entgaser 100 ist eine Vorrichtung vorgesehen, mittels derer das zugeführte erste Gemisch auf einen Druck unterhalb des Umgebungsdrucks entspannt wird. Dies kann beispielsweise mittels eines Drosselventils am Zulauf des Entgasers 100, eines Reduzierventils oder einer Querschnittsverengung in der Zuführleitung 9 erreicht werden.

Im Entgaser 100 wird das zugeführte erste Gemisch von unerwünschten Gasen, insbesondere von Sauerstoff, zumindest teilweise entgast. Hierzu kann wie in der Figur 1 gezeigt ein Strippgas aus einer Quelle 170 über eine Zuführleitung 14 und ein regelbares Ventil 11 im Gegenstrom durch den Entgaser 100 geführt werden. Mittels einer Vakuumpumpe 7 in einer Abzugsleitung 13 für das mit den unerwünschten Gasen angereicherte Strippgas 108 kann ein wohldefinierter Unterdruck im Gasraum des Entgasers 100 eingestellt werden. Das abgezogene Strippgas 108 kann entweder in die Umgebung entweichen, zwecks Recycling in einem Behälter gespeichert werden oder mit einer geeigneten Vorrichtung aufgereinigt und erneut der Quelle 170 zugeführt werden.

Der Slurry 104 kann ebenfalls einem Puffer 130 zugeführt werden. Alternativ kann der Slurry 104 in einem Vorratsbehälter bzw. Mischtank 130 bereitgestellt werden. Von dort aus kann der Slurry mittels einer Pumpe 38 oder pumpenlos (siehe unten) in einem Unterdruckbereich 180A des Entgasers 100 und/oder einem Unterdruckbereich 180B stromabwärts vom Entgaser 100 dem zumindest teilweise entgasten ersten Gemisch zudosiert werden. Wie in Figur 1 gezeigt wird der Slurry über Zuführleitungen 29 bzw. 30 dem vorerwärmten, zumindest teilweise entgasten Saft in einem Unterdruckbereich 180 der Vorrichtung zur Herstellung flüssiger oder halbflüssigen Lebensmittel zudosiert. Der Unterdruckbereich 180 umfasst hierbei den Unterdruckbereich 180A des Entgasers 100 und den Unterdruckbereich 180B stromabwärts vom Entgaser.

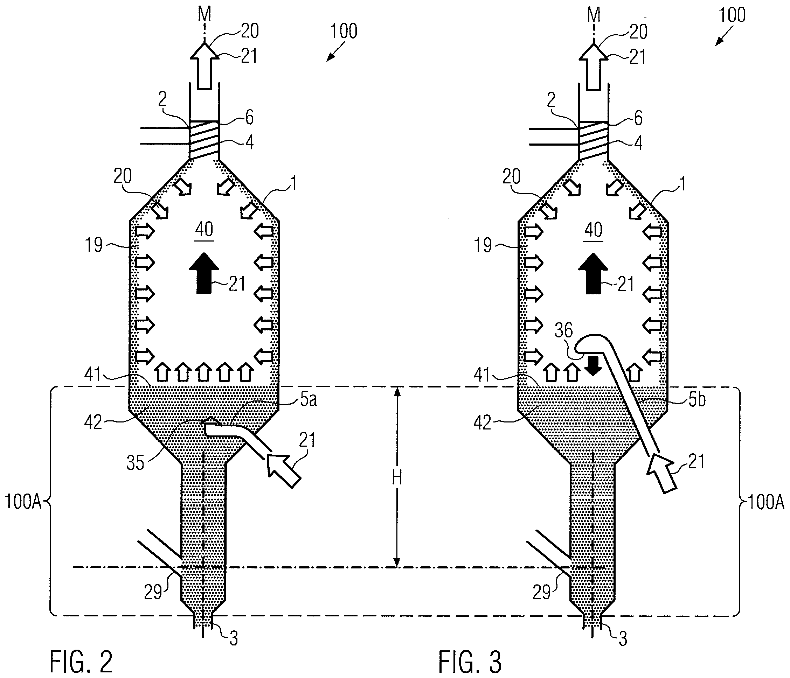

Wie oben beschrieben umfasst der Unterdruckbereich 180A des Entgasers den gesamten Innenraum sowie den Auslaufbereich 100A des Entgasers, der im Zusammenhang mit den Figuren 2 und 3 genauer beschrieben wird. Dabei beginnt der Unterdruckbereich 180A an der druckmindernden Vorrichtung, beispielsweise einen Reduzierventil 10. Entsprechend endet der Unterdruckbereich 180B räumlich an einer den Druck erhöhenden Vorrichtung, beispielsweise der Förderpumpe 18 in der Abzugsleitung 15 für das Lebensmittel.

Wie in der Figur 1 gezeigt kann die erste Zuführvorrichtung 101 neben Leitungen 9 und Ventilen 10 auch den Vorratsbehälter 110 und den Vorerwärmer 120 umfassen. Ebenso kann die zweite Zuführvorrichtung 103 neben Leitungen 29 bzw. 30 auch Pumpen 38 und einen Vorratsbehälter 130 umfassen. Weitere Vorrichtungen und Merkmale der ersten und zweiten Zuführvorrichtungen können nach Bedarf ergänzt werden.

Mittels der Förderpumpe 18 wird das nunmehr fertig gemischte Lebensmittel einem Hocherhitzer bzw. Pasteurisierer 140 zugeführt, in dem es von unerwünschten Keimen befreit wird. Wie beim Einstromverfahren ist somit lediglich ein Hocherhitzer 140 erforderlich, wodurch Installations- und Betriebskosten eingespart werden können. Vom Hocherhitzer 140 aus kann das nunmehr pasteurisierte Lebensmittel einer Abfüllanlage 160 zum Abfüllen des Getränks in Behälter, beispielsweise Flaschen, zugeführt werden. Weitere in der getränkeverarbeitenden Industrie übliche Vorrichtungen, beispielsweise Etikettiervorrichtungen, Kühlvorrichtungen, Lagervorrichtungen oder dergleichen können nach Bedarf hinzugefügt werden.

Die Figur 2 zeigt schematisch einen Entgaser 100 und seinen Auslaufbereich 100A gemäß einer ersten Weiterbildung. Dabei weist der Entgaser 100 einen Behälter 1, insbesondere einen Vakuumbehälter, auf, der einen unteren Bereich mit einem Boden, dessen Durchmesser nach unten abnimmt, umfasst. Wie in der Figur 2 gezeigt kann der Bodenbereich insbesondere teilweise konisch ausgebildet sein. Der Behälter kann beispielsweise ein Volumen von 1 m³ bis 5 m³ aufweisen. Im oberen Bereich des Behälters 1 ist ein Zulauf 2 für das zu entgasende erste Gemisch vorgesehen, über den das erste Gemisch in den Behälter eingeleitet wird.

Gemäß dieser Weiterbildung ist der Zulauf 2 mit einer Verteilereinrichtung 4 versehen, die derart ausgebildet ist, dass sie einen Rieselfilm 19 aus zu entgasendem erstem Gemisch an einer Behälterinnenfläche erzeugt. Unter einem Rieselfilm versteht man hier einen Fallfilm, der an einer Behälterinnenwand nach unten in Richtung Auslauf 3 fließt. Der Rieselfilm ist dabei unterhalb der Verteilereinrichtung 4 vorzugsweise rotationssymmetrisch zur Mittelachse M des Behälters 1 ausgebildet. Der Rieselfilm kann beispielsweise in einem Flüssigkeitsreservoir 42 im unteren Bereich des Behälters 1 enden. Die Rieselfilmdicke kann beispielsweise in einem Bereich von 0,1 mm bis 1 mm liegen. Der Rieselfilm weist eine besonders große Oberfläche zum Gasraum 40 des Behälters 1 auf, über die der Gasaustausch mit dem Strippgas besonders effektiv erfolgen kann.

In der gezeigten Ausführungsform ist als Verteilereinrichtung 4 eine Dralleinlaufdüse vorgesehen, welche dazu ausgebildet ist, das einlaufende erste Gemisch in eine Rotationsbewegung zu versetzen. Dabei entsteht ein dünner, turbulenter Rieselfilm 19, der über die gesamte Behälterinnenfläche nach unten fließt. Anstelle der Dralleinlaufdüse können jedoch auch ein Doppelschirm oder eine Drosselvorrichtung als Verteilereinrichtung 4 verwendet werden. Alternativ ist es auch möglich, im oberen Bereich des Behälters 1 eine Ringleitung vorzusehen, die entweder mehrere am Umfang angeordnete Öffnungen oder einen Ringspalt aufweist, die das erste Gemisch zur Behälterinnenwand leiten, derart, dass das erste Gemisch an der Behälterinnenwand als Fall- bzw. Rieselfilm herabrinnen kann.

Neben Zulauf 2 und Auslauf 3 für das erste Gemisch bzw. Lebensmittel umfasst der Entgaser 100 auch eine Strippgaszuleitung 5a im unteren Bereich des Behälters sowie eine Strippgasableitung 6 im oberen Bereich des Behälters. Durch die Strippgaszu- und -ableitung kann ein Gegenstrom 21 von Strippgas erzeugt werden. Wie aus der Figur 2 hervorgeht, ragt vom unteren Teil des Behälters 1 aus eine Gasleitung 5a in den Behälter. Dabei ist bei dieser Ausführung die mit einem Sieb 35 zur Blasenerzeugung abgeschlossene Öffnung der Gasleitung 5a auf einer Höhe angeordnet, die unterhalb einer Spiegelfläche 41, d.h. unterhalb des Füllstands, des sich in dem Bodenbereich des Entgasers ansammelnden ersten Gemischs 42 angeordnet ist. Der maximale Füllstand 41 kann durch eine Füllstandsregelung festgelegt und eingestellt werden. Über das Sieb 35 kann das Strippgas 21 in das erste Gemisch und dann in den Gasraum 40 des Behälters eintreten.

Die Figur 2 zeigt weiterhin die Zuführleitung 29 für den Slurry, welche in der dargestellten, nicht limitierenden Weiterbildung derart angeordnet ist, dass der Slurry in den Bodenbereich des Entgasers unterhalb des Füllstands 41 eingebracht wird. Genauer gesagt ist die Zuführleitung 29 derart angeordnet, dass ihre Mündung eine Höhe H unterhalb des Füllstands 41 liegt. Das Gewicht der über der Mündung stehenden Flüssigkeitssäule mit Höhe H hebt den im Gasraum 40 vorherrschenden Unterdruck auf einen Wert an, der zwischen dem Unterdruck und dem Umgebungsdruck liegt. Somit ist beim Zudosieren des Slurry in den Bodenbereich des Entgasers 100 eine geringere Druckdifferenz zu überwinden als beim Einstromverfahren, bei dem der Slurry zusammen mit dem ersten Gemisch über den Zulauf 2 in den Gasraum 40 eintritt. Die Zudosage des Slurry in den Bodenbereich des Entgasers ist somit produktschonender als im Einstromverfahren. Gleichzeitig herrscht im Bodenbereich des Entgasers weiterhin ein Druck, der geringer als der Umgebungsdruck ist, sodass der Slurry in der zweiten Zuführvorrichtung wie unten beschrieben pumpenlos gefördert werden kann. Die Zudosage in den Unterdruckbereich des Entgasers bewirkt darüber hinaus ein zumindest teilweises Entgasen der mitgeführten Fruchtstückchen von unerwünschten Gasen. Um ein Auftreiben der Fruchtstückchen im Bodenbereich des Entgasers zu vermeiden, kann die Zuführleitung 29 wie in der Figur 2 angedeutet in Richtung der allgemeinen Strömung im Bodenbereich ausgerichtet sein.

Wie oben beschrieben umfasst der Auslaufbereich 100A den Bodenbereich des Entgasers inklusive des Auslaufs 3 für das zumindest teilweise entgaste Produkt. Das in der Figur 3 gezeigte alternative Ausführungsbeispiel entspricht dem in der Figur 2 gezeigten Ausführungsbeispiel mit der Ausnahme, dass die Öffnung 36 der Strippgaszuleitung 5b oberhalb der Oberfläche 41 nach unten, d.h. zu der Oberfläche 41 des sich in dem Bodenbereich des Behälters 1 ansammelnden ersten Gemischs 42, gerichtet ist. Die Öffnung 36 befindet sich dabei vorzugsweise im Bereich der Mittelachse M des Behälters. Wenn das Strippgas über eine nach unten gerichtete Einströmöffnung in den Gasraum 40 eingeleitet wird, ergibt sich der Vorteil, dass auch die Spiegeloberfläche 41 des ersten Gemischs im unteren Bereich des Behälters "abgeblasen" wird, wodurch vermehrt Sauerstoff ausgetrieben werden kann. Bei der in der Figur 2 gezeigten Variante fördert die Bildung von in der Flüssigkeit 42 aufsteigenden Blasen des Strippgases das Lösen von Strippgas im ersten Gemisch und damit ebenfalls das Austreiben von Sauerstoff.

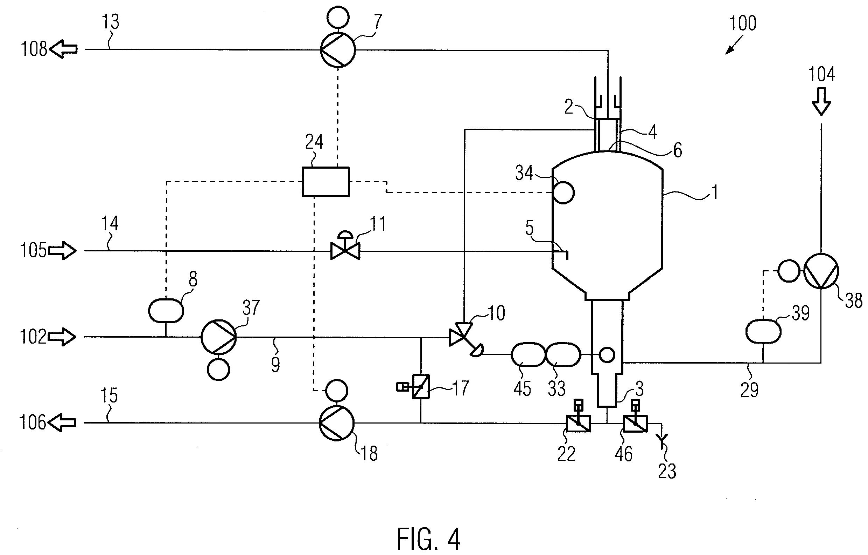

Figur 4 zeigt schematisch eine Vorrichtung zum Zudosieren des zweiten Gemischs gemäß einer ersten Weiterbildung der vorliegenden Erfindung. Wie bereits erwähnt wird das Strippgas 105 über eine Leitung 14, ein regelbares Ventil 11 und die Strippgaszuleitung 5 in den Behälter 1 des Entgasers 100 eingebracht und mittels der regelbaren Vakuumpumpe 7 über die Strippgasableitung 6 und die Leitung 13 als verunreinigtes Strippgas 108 aus dem Behälter 1 abgezogen. Dabei kann das abgezogene, mit Sauerstoff angereicherte Strippgas 108 eine Vorrichtung zum Entzug von Sauerstoff zugeführt werden.

Über eine Leitung 9 und ein regelbares Ventil 10 zum Druckabbau wird das zu entgasende erste Gemisch 102 zu dem Zulauf 2 und der Verteilereinrichtung 4 geleitet. Hierbei kann in der Zuführleitung 9 für das erste Gemisch eine regelbare Förderpumpe 37 vorgesehen sein, die beispielsweise als Rotationspumpe ausgebildet ist. Der an der Behälterinnenwand herabrinnende Rieselfilm sammelt sich im unteren Bereich des Behälters 1, wobei in diesem Bereich gemäß der gezeigten Weiterbildung ein Drucksensor 33 vorgesehen ist, mittels dessen der Füllstand an Flüssigkeit bestimmt werden kann. Der gemessene Druck wird dabei an einen Regler 45 weitergegeben, der das Stellventils 10 und/oder die Förderpumpe 37 in der Leitung 9 ansteuert. Die Förderpumpe 37 kann den Saft beispielsweise bei einem Druck von 5 bar in der Zuführleitung 9 fördern, wobei das regelbare Reduzierventil 10 einen Druckabbau auf die im Gasraum des Entgasers vorherrschenden 200 mbar bewirkt. Mithilfe des Ventils 10 und/oder der Förderpumpe 37 lässt sich somit ein gewünschter Volumenstrom an Saft einstellen. Über den Auslauf 3 und ein Ablaufventil 22 in der Abzugsleitung 15 wird das zumindest teilweise entgaste Lebensmittel mittels einer regelbaren Förderpumpe 18 abgeleitet. Dabei können das Stellventil 22 und/oder die Förderpumpe 18 in Abhängigkeit von dem gemessenen Druck des Drucksensors 33 derart eingestellt werden, dass ein bestimmter Füllstand im Bodenbereich des Entgasers eingestellt wird. Bei geregeltem Füllstand wird das zu entgasende Produkt dann kontinuierlich zu- und abgeleitet. In der Abzugsleitung 15 kann ebenfalls ein weiteres Stellventil 46 angeordnet sein, über das Flüssigkeit aus dem Behälter (zum Beispiel Reinigungsflüssigkeit) über den Kanal 23 verworfen werden kann.

Wie erwähnt kann die Menge an abgezogenem Lebensmittel zudem über eine Regelung der Förderpumpe 18 erfolgen, wobei eine Steuereinheit 24 vorgesehen ist, welche die Pumpleistung der Förderpumpe 18 regelt. Die Förderpumpe 18 ist es auch, die den Unterdruckbereich stromabwärts vom Entgaser räumlich begrenzt, indem sie den Druck des abgezogenen Lebensmittels anhebt. Die Füllstandskontrolle bzw. Regelung des Stellventils 10 und die Regelung der Vakuumpumpe 7 können ebenfalls von der Steuereinheit 24 vorgenommen werden. Auch wenn es in der Figur 4 nicht durch gestrichelte Linien angedeutet ist, kann eine zentrale Steuereinheit 24 auch die Regelung weiterer regelbarer Ventile und/oder Pumpen übernehmen.

In Abhängigkeit von einer mit dem Temperatursensor 8 gemessenen Temperatur des einlaufenden ersten Gemischs in der Zuführleitung 9 und/oder dem mit dem Drucksensor 34 gemessenen Gesamtdruck im Gasraum des Behälters 1 kann die Steuereinheit 24 insbesondere über eine Regelung des Stellventils 11 und des Stellventils 10 den Zustrom an Strippgas 105 und zu entgasendem ersten Gemisch 102 derart steuern, dass ein optimales Ausgasen von Sauerstoff aus dem Rieselfilm stattfindet. Die Vakuumpumpe 7 kann dabei von der Steuereinheit 24 derart geregelt werden, dass der Partialdruck von Sauerstoff in der Atmosphäre im Gasraum des Behälters 1 stets so niedrig ist, dass ein vorgegebener Restgehalt an Sauerstoff bei dem über die Abzugsleitung 15 abgezogenen Lebensmittel 106 stets unterschritten wird. Die Steuereinheit 24 kann die Regelung der Stellventile 10 und 11 sowie der Pumpen 7 und 18 dabei anhand empirischer Messkurven vornehmen, welche einen Restgehalt an Sauerstoff unter einem vorgegebenen Schwellwert garantieren.

Schließlich zeigt die Figur 4 ein Bypassventil 17 zur bedarfsabhängigen Umgehung des Entgasers 100.

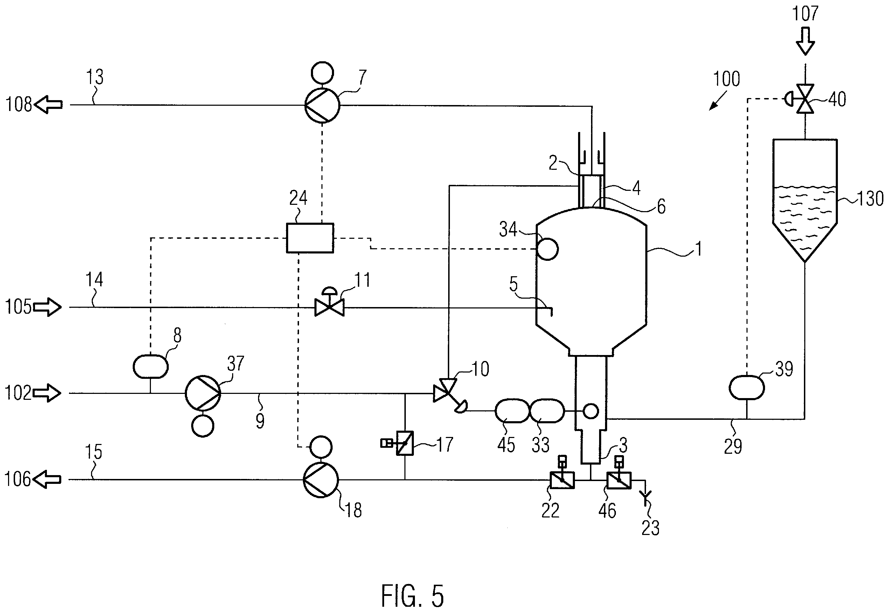

Gemäß der in der Figur 4 gezeigten Weiterbildung wird der Slurry 104 über eine Zuführleitung 29 der zweiten Zuführvorrichtung in einen Bodenbereich des Entgasers 100 zudosiert. Gemäß der hier gezeigten, nicht limitierenden Weiterbildung misst ein Durchflussmesser 39 den Volumenstrom an Slurry in der Leitung 29 und regelt damit eine Pumpe 38, um eine rezepturgemäße Zudosage von Slurry zu dem zumindest teilweise entgasten ersten Gemisch zu garantieren. Bei der gezeigten Pumpe 38 kann es sich dabei um eine produktschonende Förderpumpe, insbesondere eine Verdrängerpumpe oder Schubpumpe handeln, welche den Slurry ohne wesentliche Scherbeanspruchung der enthaltenen Fruchtstückchen fördert. Wie in der Figur 5 gezeigt kann die Zufuhr von Slurry zum ersten Gemisch jedoch auch ohne Förderleistung, d.h. allein durch die Druckdifferenz und/oder das Eigengewicht des zweiten Gemischs erfolgen. Beispielsweise kann der Slurry 104 mit dem Umgebungsdruck bereitgestellt werden, sodass sich eine Druckdifferenz von bis zu 800 mbar zwischen dem Bereitstellungsdruck des Slurry und dem Unterdruckbereich des Entgasers einstellt. In diesem Fall kann eine regelbare Bremspumpe 38 in der Zuführleitung 29 vorgesehen sein, um die Menge an zudosiertem Slurry ohne Drosselklappe regeln zu können.

In der Figur 5 ist schematisch einer alternativen Weiterbildung gezeigt, welche vollständig auf die in der Figur 4 gezeigte Pumpe 38 verzichtet. Auch hier ist ein Durchflussmesser 39 vorgesehen, der den Volumenstrom an Slurry in der Zuführleitung 29 misst. Anders als in der Weiterbildung der Figur 4 wird anhand der gemessenen Durchflussmenge jedoch keine Pumpleistung geregelt, sondern ein regelbares Belüftungsventil 40 für den Vorratsbehälter 130 geregelt, in dem der Slurry, vorzugsweise im Schwerefeld der Erde oberhalb der Mündung der Zuführleitung 29 in den Auslaufbereich des Entgasers 100, bereitgestellt wird. Mit Hilfe des regelbaren Belüftungsventils 40, beispielsweise eines Schnüffelventils, lässt sich der Gasdruck im Gasraum über dem Füllstand des Slurry im Vorratsbehälter 130 auf einen gewünschten Wert unterhalb des Umgebungsdrucks einstellen. Um eine Kontamination der Fruchtstückchen mit Sauerstoff zu vermeiden, kann das Schnüffelventil 40 mit einer Vorratsleitung oder einem Vorratsbehälter für ein Inertgas 107, beispielsweise Kohlendioxid oder Stickstoff, verbunden sein.

Durch gezieltes Belüften des Vorratsbehälters 130 lässt sich somit ein gewünschter Volumenstrom an Slurry in der Zuführleitung 29 einstellen. Dieser Volumenstrom kann dabei gemäß der gewählten Rezeptur dem Volumenstrom an Saft in der Zuführleitung 9 angepasst werden. Da die Förderung des Slurry in der Zuführleitung 29 allein aufgrund der Druckdifferenz zwischen dem Druck im Vorratsbehälter 130 und dem Druck im Unterdruckbereich an der Mündung der Zuführleitung 29 in Kombination mit der Schwerkraft des Slurry erfolgt, kann auf eine Förderpumpe vollständig verzichtet werden. Zudem gestattet die Verwendung des regelbaren Schnüffelventils 40 auch den Verzicht auf eine Förderhemmung mittels einer Bremspumpe oder Drosselklappe.

Die gezeigten Vorrichtungen gestatten es, die Vorteile des Einstromverfahrens mit den Vorteilen des Zweistromverfahrens bei der Herstellung flüssiger oder halbflüssiger Lebensmittel zu kombinieren. Insbesondere kann eine Beschädigung der Fruchtstückchen durch einen übermäßigen Druckabbau im Entgaser vermieden werden, wobei das Zudosieren in den Unterdruckbereich dennoch ein zumindest teilweises Entgasen der Fruchtstückchen erlaubt. Durch parallele Führung von Saft und Slurry können diese wie beim Zweistromverfahren unabhängig voneinander behandelt werden. Die Zudosage des Slurry in den Unterdruckbereich der Vorrichtung erfolgt dabei besonders produktschonend und wie oben beschrieben mit reduziertem technischem Aufwand, da auf eine Förderpumpe verzichtet werden kann. Dies reduziert neben den Installationskosten auch die Betriebskosten der Anlage.

## Patentansprüche

1. Vorrichtung zur Herstellung eines flüssigen oder halbflüssigen Lebensmittels, wobei das Lebensmittel ein erstes Gemisch und ein zweites Gemisch umfasst, wobei das zweite Gemisch feste Anteile, insbesondere Fruchtstücke, in einer höheren Konzentration als das erste Gemisch enthält, und wobei die Vorrichtung umfasst:
einen Entgaser (100), der dazu ausgebildet ist, das erste Gemisch zumindest teilweise zu entgasen;
eine erste Zuführvorrichtung (101) zum Zuführen des ersten Gemischs zum Entgaser; und
eine zweite Zuführvorrichtung (103) zum Zudosieren des zweiten Gemischs zum zumindest teilweise entgasten ersten Gemisch;
**dadurch gekennzeichnet, dass**
die zweite Zuführvorrichtung (103) in einen Unterdruckbereich (180A) des Entgasers oder in einen Unterdruckbereich (180B) stromabwärts vom Entgaser mündet.

2. Vorrichtung nach Anspruch 1, wobei die zweite Zuführvorrichtung (103) in einen Auslauf (3) des Entgasers für das zumindest teilweise entgaste erste Gemisch mündet.

3. Vorrichtung nach Anspruch 1, wobei die zweite Zuführvorrichtung (103) in den Entgaser unterhalb eines Füllstands (41) von sich in einem Bodenbereich des Entgasers ansammelndem Lebensmittel (42) mündet.

4. Vorrichtung nach Anspruch 1, wobei die zweite Zuführvorrichtung (103) in eine mit dem Entgaser verbundene Abzugsleitung (15) mündet, und insbesondere ein Siphon zwischen dem Entgaser und der Stelle der Einmündung der zweiten Zuführvorrichtung vorgesehen ist.

5. Vorrichtung nach einem der vorhergehenden Ansprüche, wobei die zweite Zuführvorrichtung (103) einen Vorratsbehälter (130), insbesondere einen Mischtank, zum Bereitstellen des zweiten Gemischs mit einem Vordruck aufweist, der größer als der Druck im Unterdruckbereich (180) ist.

6. Vorrichtung nach Anspruch 5, wobei die zweite Zuführvorrichtung (103) derart ausgebildet ist, dass eine Förderung des zweiten Gemischs in der zweiten Zuführvorrichtung über eine Druckdifferenz zwischen dem Vordruck und dem Druck im Unterdruckbereich erfolgt.

7. Vorrichtung nach Anspruch 5 oder 6, wobei der Vorratsbehälter (130) mit einem regelbaren Ventil (40), insbesondere einem Schnüffelventil, zum Ansaugen eines Fremdgases ausgestattet ist.

8. Vorrichtung nach einem der vorhergehenden Ansprüche, wobei die zweite Zuführvorrichtung (103) eine Pumpe (38) zum Fördern des zweiten Gemischs, insbesondere eine Verdrängerpumpe oder eine Schubpumpe, oder eine Bremspumpe aufweist.

9. Vorrichtung nach einem der vorhergehenden Ansprüche, wobei nach dem Unterdruckbereich (180B) des Entgasers eine Abfülleinrichtung (160) für das erste und zweite Gemisch angeordnet ist.

10. Verfahren zur Herstellung eines flüssigen oder halbflüssigen Lebensmittels, wobei das Lebensmittel ein erstes Gemisch und ein zweites Gemisch umfasst, wobei das zweite Gemisch feste Anteile, insbesondere Fruchtstücke, in einer höheren Konzentration als das erste Gemisch enthält, mit den Schritten:
Zuführen des ersten Gemischs zu einem Entgaser (100);
zumindest teilweises Entgasen des ersten Gemischs im Entgaser; und
Zudosieren des zweiten Gemischs zum zumindest teilweise entgasten ersten Gemisch;
**dadurch gekennzeichnet, dass**
die Zudosage des zweiten Gemischs in einen Unterdruckbereich (180A) des Entgasers oder in einen Unterdruckbereich (180B) stromabwärts vom Entgaser erfolgt.

11. Verfahren nach Anspruch 10, wobei die Zudosage des zweiten Gemischs in einen Auslauf (3) des Entgasers für das zumindest teilweise entgaste erste Gemisch erfolgt.

12. Verfahren nach Anspruch 10, wobei die Zudosage des zweiten Gemischs in den Entgaser unterhalb eines Füllstands (41) von sich in einem Bodenbereich des Entgasers ansammelndem Lebensmittel (42) erfolgt.

13. Verfahren nach Anspruch 10, wobei die Zudosage des zweiten Gemischs in eine mit dem Entgaser verbundene Abzugsleitung (15), insbesondere stromabwärts von einem stromabwärts vom Entgaser angeordneten Siphon erfolgt.

14. Verfahren nach einem der Ansprüche 10 bis 13, wobei das zweite Gemisch zumindest teilweise aufgrund einer Druckdifferenz zwischen einem Bereitstellungsdruck des zweiten Gemischs und dem Unterdruck im Unterdruckbereich (180) zudosiert wird.

15. Verfahren nach einem der Ansprüche 10 bis 14, wobei das zweite Gemisch zumindest teilweise mittels einer Pumpe (38), insbesondere einer Verdrängerpumpe, einer Bremspumpe oder einer Schubpumpe zudosiert wird.

16. Verfahren nach einem der Ansprüche 10 bis 15, wobei das zweite Gemisch zumindest teilweise mittels der Schwerkraft zudosiert wird.

17. Verfahren nach einem der Ansprüche 10 bis 16, wobei das flüssige oder halbflüssige Lebensmittel nach dem Zumischen des zweiten Gemischs zum ersten Gemisch abgefüllt wird.

## Claims

1. Device for producing a liquid or semi-liquid foodstuff, the foodstuff comprising a first mixture and a second mixture, the second mixture containing solid portions, in particular fruit pieces, in a higher concentration than the first mixture, and the device comprising:
a degasser (100) which is designed to degas the first mixture at least in part;
a first supply device (101) for supplying the first mixture to the degasser; and
a second supply device (103) for metering the second mixture to the at least partially degassed first mixture;
**characterised in that**
the second supply device (103) leads into a low-pressure region (180A) of the degasser or into a low-pressure region (180B) downstream of the degasser.

2. Device according to claim 1, wherein the second supply device (103) leads into an outlet (3) of the degasser for the at least partially degassed first mixture.

3. Device according to claim 1, wherein the second supply device (103) leads into the degasser below a fill level (41) of foodstuff (42) accumulating in a base region of the degasser.

4. Device according to claim 1, wherein the second supply device (103) leads into an extraction line (15) connected to the degasser, and in particular a siphon is provided between the degasser and the position of the mouth of the second supply device.

5. Device according to any of the preceding claims, wherein the second supply device (103) has a supply container (130), in particular a mix tank, for providing the second mixture with an inlet pressure that is greater than the pressure in the low-pressure region (180).

6. Device according to claim 5, wherein the second supply device (103) is designed in such a way that the second mixture is conveyed in the second supply device by means of a pressure difference between the inlet pressure and the pressure in the low-pressure region.

7. Device according to either claim 5 or claim 6, wherein the supply container (130) is equipped with an adjustable valve (40), in particular a poppet valve, for suctioning a foreign gas.

8. Device according to any of the preceding claims, wherein the second supply device (103) has a pump (38) for conveying the second mixture, in particular a displacement pump, a thrust pump, or a brake pump.

9. Device according to any of the preceding claims, wherein a filling apparatus (160) for the first and second mixture is arranged downstream of the low-pressure region (180B) of the degasser.

10. Method for producing a liquid or semi-liquid foodstuff, the foodstuff comprising a first mixture and a second mixture, the second mixture containing solid portions, in particular fruit pieces, in a higher concentration than the first mixture, comprising the steps:
supplying the first mixture to a degasser (100);
degassing the first mixture in the degasser at least in part; and
metering the second mixture to the at least partially degassed first mixture;
**characterised in that**
the second mixture is metered into a low-pressure region (180A) of the degasser or into a low-pressure region (180B) downstream of the degasser.

11. Method according to claim 10, wherein the second mixture is metered into an outlet (3) of the degasser for the at least partially degassed first mixture.

12. Method according to claim 10, wherein the second mixture is metered into the degasser below a fill level (41) of foodstuff (42) accumulating in a base region of the degasser.

13. Method according to claim 10, wherein the second mixture is metered into an extraction line (15) connected to the degasser, in particular downstream of a siphon arranged downstream of the degasser.

14. Method according to any of claims 10 to 13, wherein the second mixture is metered at least in part due to a pressure difference between a provision pressure of the second mixture and the low pressure in the low-pressure region (180).

15. Method according to any of claims 10 to 14, wherein the second mixture is metered at least in part by means of a pump (38), in particular a displacement pump, a brake pump or a thrust pump.

16. Method according to any of claims 10 to 15, wherein the second mixture is metered at least in part by means of gravitational force.

17. Method according to any of claims 10 to 16, wherein the liquid or semi-liquid foodstuff is filled after the admixture of the second mixture to the first mixture.

## Revendications

1. Dispositif pour la fabrication d'un produit alimentaire liquide ou semi-liquide, le produit alimentaire comprenant un premier mélange et un deuxième mélange, le deuxième mélange renfermant des constituants solides, notamment des morceaux de fruits, selon une concentration plus élevée que le premier mélange, et le dispositif comprenant :
un dégazeur (100) qui est conçu pour dégazer au moins partiellement le premier mélange ;
un premier dispositif d'amenée (101) pour amener le premier mélange au dégazeur ; et
un deuxième dispositif d'amenée (103) pour l'ajout dosé du deuxième mélange au premier mélange au moins partiellement dégazé ;
**caractérisé en ce que**
le deuxième dispositif d'amenée (103) débouche dans une zone de dépression (180A) du dégazeur ou dans une zone de dépression (180B) en aval du dégazeur.

2. Dispositif selon la revendication 1, dans lequel le deuxième dispositif d'amenée (103) débouche dans un écoulement de sortie (3) du dégazeur pour le premier mélange au moins partiellement dégazé.

3. Dispositif selon la revendication 1, dans lequel le deuxième dispositif d'amenée (103) débouche dans le dégazeur en-dessous d'un niveau de remplissage (41) de produit alimentaire (42) s'accumulant dans la zone de fond du dégazeur.

4. Dispositif selon la revendication 1, dans lequel le deuxième dispositif d'amenée (103) débouche dans une conduite de soutirage (15) reliée au dégazeur, et dans lequel il est notamment prévu un siphon entre le dégazeur et l'endroit de l'embouchure du deuxième dispositif d'amenée.

5. Dispositif selon l'une des revendications précédentes, dans lequel le deuxième dispositif d'amenée (103) présente un réservoir (130), notamment un réservoir de mélange, pour préparer et mettre à disposition le deuxième mélange avec une pression primaire, qui est plus grande que la pression dans la zone de dépression (180).

6. Dispositif selon la revendication 5, dans lequel le deuxième dispositif d'amenée (103) est réalisé de manière telle, qu'un refoulement du deuxième mélange dans le deuxième dispositif d'amenée s'effectue par l'intermédiaire d'une différence de pression entre la pression primaire et la pression dans la zone de dépression.

7. Dispositif selon la revendication 5 ou la revendication 6, dans lequel le réservoir (130) est équipé d'une soupape réglable (40), notamment d'un reniflard, pour l'aspiration d'un gaz étranger.

8. Dispositif selon l'une des revendications précédentes, dans lequel le deuxième dispositif d'amenée (103) présente une pompe (38) pour le refoulement du deuxième mélange, notamment une pompe volumétrique ou une pompe à poussée, ou bien une pompe-frein.

9. Dispositif selon l'une des revendications précédentes, dans lequel après la zone de dépression (180B) du dégazeur, est agencé un système de conditionnement par remplissage (160) pour le premier et le deuxième mélange.

10. Procédé pour la fabrication d'un produit alimentaire liquide ou semi-liquide, le produit alimentaire comprenant un premier mélange et un deuxième mélange, le deuxième mélange renfermant des constituants solides, notamment des morceaux de fruits, selon une concentration plus élevée que le premier mélange, et le procédé comprenant les étapes suivantes :
l'amenée du premier mélange à un dégazeur (100) ;
le dégazage au moins partiel du premier mélange dans le dégazeur ; et
l'ajout dosé du deuxième mélange au premier mélange au moins partiellement dégazé ;
**caractérisé en ce que**
l'ajout dosé du deuxième mélange est effectué dans une zone de dépression (180A) du dégazeur ou dans une zone de dépression (180B) en aval du dégazeur.

11. Procédé selon la revendication 10, d'après lequel l'ajout dosé du deuxième mélange est effectué dans un écoulement de sortie (3) du dégazeur pour le premier mélange au moins partiellement dégazé.

12. Procédé selon la revendication 10, d'après lequel l'ajout dosé du deuxième mélange est effectué dans le dégazeur en-dessous d'un niveau de remplissage (41) de produit alimentaire (42) s'accumulant dans la zone de fond du dégazeur.

13. Procédé selon la revendication 10, d'après lequel l'ajout dosé du deuxième mélange est effectué dans une conduite de soutirage (15) reliée au dégazeur, notamment en aval d'un siphon agencé en aval du dégazeur.

14. Procédé selon l'une des revendications 10 à 13, d'après lequel le deuxième mélange est ajouté de manière dosée sous l'effet d'une différence de pression entre une pression de mise à disposition du deuxième mélange et la dépression dans la zone de dépression (180).

15. Procédé selon l'une des revendications 10 à 14, d'après lequel le deuxième mélange est ajouté de manière dosée, au moins en partie au moyen d'une pompe (38), notamment une pompe volumétrique, une pompe-frein ou une pompe à poussée.

16. Procédé selon l'une des revendications 10 à 15, d'après lequel le deuxième mélange est ajouté de manière dosée, au moins en partie au moyen de la force de gravité.

17. Procédé selon l'une des revendications 10 à 16, d'après lequel le produit alimentaire liquide ou semi-liquide est conditionné par remplissage après que le deuxième mélange ait été additionné et mélangé au premier mélange.
